# EUROPEAN PATENT SPECIFICATION

(11) **EP 3 812 657 B1**
(45) Date of publication and mention of the grant of the patent: **31.07.2024**
(21) Application number: 19876279.1
(22) Date of filing: 01.03.2019
(51) Int. Cl.: F24C 7/06, F24C 7/08, F24C 15/14, F24C 15/10, H05B 6/12

(54) **HEATING APPLIANCE**
HEIZGERÄT
APPAREIL DE CHAUFFAGE

(30) Priority: 23.10.2018 CN 201821714886 U
(43) Date of publication of application: 28.04.2021
(73) Proprietor: Foshan Shunde Midea Electrical Heating Appliances Manufacturing Co., Limited, Foshan, Guangdong 528311 (CN)
(72) Inventor: YANG, Yi, Foshan, Guangdong 528311 (CN); SU, Chang, Foshan, Guangdong 528311 (CN); WANG, Shuai, Foshan, Guangdong 528311 (CN); LUO, Shaosheng, Foshan, Guangdong 528311 (CN); JIANG, Taiyang, Foshan, Guangdong 528311 (CN)
(74) Representative: RGTH
(86) International application number: PCT/CN2019/076707
(87) International publication number: WO 2020/082659

(56) References cited:
- WO-A1-2018/188573
- CN-A- 108 449 820
- CN-U- 202 546 860
- CN-U- 206 522 812
- CN-U- 207 279 711
- CN-U- 207 407 385
- CN-U- 207 763 002
- CN-U- 207 763 002
- CN-Y- 2 729 552
- CN-Y- 2 789 638
- JP-A- S59 219 632

## Description

### FIELD

The present application relates to the field of kitchen appliances, and particularly relates to a heating appliance.

### BACKGROUND

For the existing heating appliances such as induction cookers, a protruding temperature sensor directly contacts a pot to measure the temperature of the pot, which can increase the accuracy of temperature measurement and solve the problems such as scorching caused by excessively high pot temperature. In the structure of a temperature sensor of an existing heating appliance, a thermistor module is mounted into a housing from bottom to top, the thermistor is pushed upwardly and is supported by a sleeve, a limiting clamp spring is assembled with the housing, and the limiting clamp spring is abutted against the sleeve to limit the sleeve to prevent the thermistor module from being pulled out downwards. The housing passes through a through hole of a coil disc, and a spring is provided for elastic support between the coil disc and the housing. In addition, the limiting clamp spring on the housing acts as a pin and is invertedly hooked around the through hole of the coil disc so as to restrain the housing from being pulled out upwardly. There are many such structural parts, and it is necessary to pass the housing through the through hole of the coil disc and then pass the limiting clamp spring therethrough. In this way, the assembly process of the temperature sensor is as follows: first passing the housing through the through hole of the coil disc, then mounting the thermistor, sleeve and other components into the housing upwardly, and finally assembling the limiting clamp spring with the housing so that the limiting clamp spring limits the sleeve downwards while limiting the housing upwardly. In the assembly process, the assembly steps of the parts of the temperature sensor are involved in the assembly line of the heating appliance. As a result, the assembly of the heating appliance is complicated and involves many assembly processes, which will easily incur bottleneck processes and reduce the production efficiency.

WO 2018/188578 A1 discloses an electromagnetic oven with a base housing, a panel, a temperature sensor which is extending through hole of the panel. A sealing structure, for preventing liquid from entering, is provided between the through hole of the panel and the temperature sensor. The movement of the temperature sensor is limited by the panel. In prior art CN 206 522 812 U an induction cooker telescopic thermostat is disclosed. The thermostat comprises a limiting ring which abuts against the heating panel. CN 108 449 820 A discloses an electromagnetic cooking appliance.

### SUMMARY

In order to solve at least one of the above technical problems, an object of the present application is to provide a heating appliance with a simplified assembly process.

In order to achieve the above object, the present application provides a heating appliance, comprising: a panel provided with a through hole; a heating part located below the panel and provided with a mounting hole and a limiting block protruding into the mounting hole; a movable probe inserted into the through hole and capable of moving along the through hole, the movable probe being provided with a stop-limiting portion, the stop-limiting portion being located below the panel and configured to be abutted against the panel to restrain the movable probe from escaping from the through hole; and an elastic support extending into the mounting hole and supported by the limiting block, the elastic support supporting the movable probe and providing a force to press the stop-limiting portion to the panel.

The heating part is provided with a mounting groove in which the movable probe is assembled, wherein aside wall of the mounting groove is provided with a limiting rib, the movable probe is provided with a lug, and the limiting rib is configured to abut against the lug to restrict the movable probe in the mounting groove.

In this solution, a mounting groove is provided on the heating part for accommodating the movable probe, and a limiting rib is provided on the side wall of the mounting groove to realize a limiting fit with the lug of the movable probe so as to restrict the movable probe in the mounting groove. In this way, it is possible to realize assembly pre-fixation between the movable probe, the heating part and the elastic support, which is more conducive to the assembly line of the heating appliance, and also makes the subsequent process of assembling a panel easier and more convenient.

For the heating appliance provided by the above embodiment of the present application, when a pot is placed on the panel, the movable probe will be pressed down to protrude along the through hole to a position on the upper side of the panel. At this time, the movable probe will move downwards and compress the elastic support to make the elastic support store energy. After the pot leaves the panel, the elastic support releases potential energy and drives the movable probe to move upwardly to reset, thus realizing contact temperature measurement for the pot, which has the advantage of accurate temperature measurement. In this structure, the movable probe is provided with a stop-limiting portion configured to abut against the panel to restrict the movable probe upwardly. Compared with the structure in which a limiting clamp spring for fixing a thermistor is also used to cooperate with a heating part for upward position limiting, in this structure, the number of components is reduced, and it is only necessary to mount the movable probe and the elastic support below the movable probe onto the heating part, and then cover them with a panel so as to complete the assembly. In this way, the movable probe can be assembled with the heating part after being formed into a modular structure, and there is no need to involve the assembly process of the movable probe into the entire assembly line of the heating appliance, so that the assembly operation of the heating appliance is simpler and involves fewer processes, which avoids the bottleneck process problem of the assembly of the heating appliance, and is more conducive to the promotion of the heating appliance in the field.

In addition, the heating appliance in the above embodiment provided by the present application may further have the following additional technical features:

In the above technical solution, the limiting rib is in a n-shape, and the lug extends into an area enclosed by the n-shape.

In this solution, the lug of the movable probe extends into the n-shaped limiting rib to form a limiting fit. The n-shaped limiting rib can be used to not only limit the lug upwardly to prevent the movable probe from escaping from the mounting groove, but also limit the lug on both sides, that is, the rotation of the movable probe is restricted to a certain extent. In this way, it is possible to prevent a failure in limiting the movable probe due to disengagement between the lug and the limiting rib; and for a structure in which the movable probe is connected to a signal or a power supply through a lead-out wire, it is also possible to prevent the problem of entanglement of the lead-out wire of the movable probe caused by the rotation of the movable probe.

In the above technical solution, the two side edges of the n-shape are correspondingly a first edge and a second edge, the first edge and the second edge have first ends connected to a top edge of the n-shape, and the first edge is shorter than the second edge, so that the second end of the first edge is higher than the second end of the second edge.

In this solution, the first edge is set to be shorter than the second edge, so that the other end of the first edge is higher than the other end of the second edge. In this way, when the movable probe is pressed down until the lug is lower than the other end of the first edge, the lug can enter a position between the first edge and the second edge by rotating the movable probe. Moreover, since the second edge is longer than the first edge, during the rotation, the lug abutting against the second edge can be regarded as an indication of rotation in place. At this time, after the downward pressure on the movable probe is released, the elastic support can release potential energy to drive the lug to automatically enter the area enclosed by the n-shape so as to complete the assembly, which has the advantages of simple structure and convenient assembly.

In any of the above technical solutions, the mounting hole has an annular wall, the heating part is provided with a water receiving groove distributed around the annular wall, and the annular wall separates a space of the water receiving groove from an inner space of the mounting hole.

In this solution, an annular wall is provided to separate the water receiving groove from the mounting hole, which can prevent water entering at the position of the mounting hole and improve the electrical safety of the product.

In one of the above specific technical solutions, the movable probe is provided with an outer cover portion with an opening facing downwards, wherein a mouth of the outer cover portion extends downwards into the water receiving groove, and the annular wall extends into the outer cover portion along the opening of the outer cover portion.

In the above technical solution, further, a part of the elastic support for supporting the movable probe is arranged inside the outer cover portion.

In this solution, an outer cover portion is provided, and the annular wall extends upwardly into the outer cover portion along the opening of the outer cover portion. In this way, the outer cover portion can shield the annular wall, so that water entering along the through hole is blocked outside of the outer cover portion by the outer cover portion, thereby preventing water from entering the mounting hole and further enhancing the electrical safety of the product. Moreover, since the mouth of the outer cover portion extends downwards into the water receiving groove, water on the surface of the outer cover portion is directly guided into the water receiving groove, which can promote water entering the heating appliance to be discharged along a drainage structure as soon as possible, thereby preventing water entering the heating appliance from flowing freely, and avoiding mold and damp inside the heating appliance.

In another of the above specific technical solutions, the movable probe is provided with an outer cover portion with an opening facing downwards, wherein a part of the elastic support for supporting the movable probe is arranged inside the outer cover portion.

In any of the above technical solutions, the water receiving groove is provided with a drainage structure for drainage.

In the above technical solution, the heating appliance further comprises a base located below the heating part, the base is provided with a drainage groove, and the drainage structure comprises a water guiding hole and a water guiding channel extending from the water guiding hole into the drainage groove.

In this solution, a drainage groove is provided on the base to drain water out of the heating appliance. In addition, the drainage structure of the water receiving groove is designed to comprise a water guiding hole and a water guiding channel extending from the water guiding hole into the drainage groove, so that water at the water receiving groove that is drained through the water guiding hole can be gently guided to the drainage groove, which avoids the problem of waterdrops splashing to affect the normal operation of other components, and ensures that water entering the heating appliance is drained off along the drainage groove as soon as possible and as thoroughly as possible.

In the above technical solution, a hole wall of the water guiding hole extends downwards to form a water guiding rib, the water guiding rib has an extension length of 1 mm-3 mm, and the water guiding rib encloses the water guiding channel.

In this solution, the extension length of the water guiding rib is set to 1 mm-3 mm, that is, the vertical height of the water guiding rib is 1 mm-3 mm. On the one hand, this ensures that the water guiding channel has a certain flow guide length to achieve good flow guide effect so that water at the water receiving groove that is drained through the water guiding hole is gently guided to the drainage groove, the water outlet height of the flow guiding channel can also be reduced, and dripping noise can be avoided; and on the other hand, the water guiding rib will not be too long, which is more conducive to ensuring the forming quality of the water guiding rib, while reducing the difficulty of the forming process of the water guiding rib and reducing the product cost.

In any of the above technical solutions, the heating appliance further comprises a sealing ring provided between the panel and the heating part and forming a sealing fit with the panel and the heating part, wherein the through hole is aligned with a central hole area of the sealing ring.

In this solution, a sealing ring is provided to hermetically connect the panel and the heating part, and the through hole is made to correspond to the central hole area of the sealing ring. In this way, water entering along the through hole will not enter a part of the heating part at the outer side of the sealing ring along a gap between the panel and the heating part, so that the part of the heating part located at the outer side of the sealing ring is formed as a reliable waterproof area; then the circuit part (such as a winding part of a coil disc, an electrothermal film distribution part of an electric hot tray, or the like) of the heating part can be designed in this waterproof area to avoid the problem of water entering the circuit of the heating part, so that the product is safer.

In one of the above specific technical solutions, a glue groove is provided on the sealing ring, a glue layer is provided in the glue groove, and the sealing ring is adhered to the panel through the glue layer.

In this solution, a glue groove is provided on the sealing ring, and a glue layer is provided in the glue groove to adhere the sealing ring to the panel, which has the advantages of high sealing reliability and convenient assembly. Moreover, the structure in which the sealing ring is adhered to the panel can form pre-fixing effect, which is more convenient for the assembly line of the product.

In another of the above specific technical solutions, the sealing ring is provided with a plurality of sealing convex ribs, and the sealing convex ribs are compressed by the panel for sealing.

In this solution, the sealing ring is provided with a plurality of sealing convex ribs, which has the advantage of simple structure. Moreover, it is understandable that compared with a general flat surface structure, the sealing convex ribs have a better resistance to deformation, and by means of the sealing convex ribs, it is possible to realize that the sealing ring abuts against the panel more closely for sealing, and effectively block the siphon effect at the gap between a flat part of the sealing edge and the panel, which is beneficial to improving the sealing effect.

In any of the above technical solutions, one of the heating part and the sealing ring is provided with a protrusion, and the other is provided with a recess, and the protrusion is embedded in the recess and abuts against a concave surface of the recess.

In this solution, the heating part is provided with a protrusion, and the protrusion is pushed to abut against the recess of the sealing ring to achieve a sealing fit with the sealing ring; or the heating part is provided with a recess, and the protrusion on the sealing ring is pushed to abut against the recess of the heating part to achieve a sealing fit with the heating part. Such a structure enables better deformation effect on the sealing ring and a closer fit between the sealing ring and the heating part, and also enables the formation of an effective sealing and waterproof path, which achieves better waterproof effect and has the advantages of simple structure and convenient assembly.

In any of the above technical solutions, a plurality of radial ridges are provided on a surface of the sealing ring for fitting with the heating part, trenches corresponding to the radial ridges are provided on the heating part, and the radial ridges are embedded in the corresponding trenches.

In this solution, a plurality of radial ridges are provided on the sealing ring, and trenches are provided on the heating part. In this way, when the sealing ring is mounted on the heating part, the radial ridges snap into the trenches to form an assembly feel, which is beneficial to improving the assembly accuracy of the sealing ring and the heating part.

In any of the above technical solutions, a lead-out wire is connected to the movable probe, and the lead-out wire passes downwards through the mounting hole.

In this solution, a lead-out wire is provided to pass downwards through the mounting hole, so that the lead-out wire can pass from under the heating part to be connected to a main board. The wire runs more conveniently, and the problem of heating the lead-out wire can also be avoided.

In the above technical solution, the lead-out wire is connected to a limiting shell, the elastic support is a spring, the spring is sleeved outside the lead-out wire and is located between the limiting shell and the movable probe, and an inner diameter of an end of the spring close to the limiting shell is smaller than an outer diameter of the limiting shell.

In this solution, a limiting shell is provided on the lead-out wire, and the inner diameter of the end of the spring close to the limiting shell is smaller than the outer diameter of the limiting shell, so that the spring will not escape from the lead-out wire.

In the above technical solution, the movable probe is provided with a guide post, and an end of the spring close to the movable probe is sleeved outside the guide post.

In this solution, a guide post is provided on the movable probe so that the spring is sleeved outside the guide post. In this way, the assembly accuracy of the spring and the movable probe is higher, and the spring is not prone to eccentricity. Thus, the movable probe can receive a more balanced force and will not be skewed easily, and the straightness of stretching and contraction of the spring can be improved by using the guide post, which helps to ensure the service life of the spring.

In any of the above technical solutions, the movable probe comprises: a bracket supported by the elastic support; a temperature sensing cap connected to the bracket, the temperature sensing cap extending into the through hole, and when the bracket moves, the bracket drives the temperature sensing cap to move along the through hole; and a temperature sensing part located on the bracket and enclosed and limited by the temperature sensing cap.

In this solution, the movable probe is provided to comprise a bracket, a temperature sensing cap and a temperature sensing part. The temperature sensing part is located on the bracket and is enclosed and limited by the temperature sensing cap assembled and connected with the bracket. In this way, a movable probe modular assembly structure is realized, and there is no need to additionally use parts such as a limiting clamp spring and a sleeve to limit and fix the temperature sensing part. The product has a reduced number of parts and reduced mounting steps, leading to a higher assembly efficiency of the product.

Of course, this solution is not limited thereto, and the structures of adhering and fixing the temperature sensing part, encapsulating and fixing the temperature sensing part by using encapsulation materials, etc. may also be employed for the realization of the movable probe modular structure.

Optionally, the heating appliance is an induction cooker, a hob, etc.

Additional aspects and advantages of the present application will become apparent in the following description, or are understood by the practice of the present application.

### BRIEF DESCRIPTION OF THE DRAWINGS

The above and/or additional aspects and advantages of the present application will become apparent and readily understood from the description of embodiments in conjunction with the following drawings:
Fig. 1 is a schematic sectional structural view of a heating appliance according to Embodiment I of the present application;
Fig. 2 is a schematic enlarged structural view of part A shown in Fig. 1;
Fig. 3 is a schematic exploded structural view of the heating appliance according to Embodiment I of the present application;
Fig. 4 is a schematic three-dimensional structural view of a sealing ring according to Embodiment I of the present application;
Fig. 5 is a schematic structural view of a heating part according to Embodiment I of the present application from a first view angle;
Fig. 6 is a schematic enlarged structural view of part B shown in Fig. 5;
Fig. 7 is a schematic structural view of the heating part according to Embodiment I of the present application from a second view angle;
Fig. 8 is a schematic enlarged structural view of part C shown in Fig. 7;
Fig. 9 is a schematic sectional structural view of a movable probe and elastic support assembly according to Embodiment I of the present application;
Fig. 10 is a schematic exploded structural view of the assembly shown in Fig. 9;
Fig. 11 is a schematic sectional structural view of the movable probe and elastic support assembly according to Embodiment II of the present application;
Fig. 12 is a schematic three-dimensional structural view of the sealing ring according to Embodiment III of the present application; and
Fig. 13 is a schematic sectional structural view of the sealing ring according to Embodiment III of the present application.

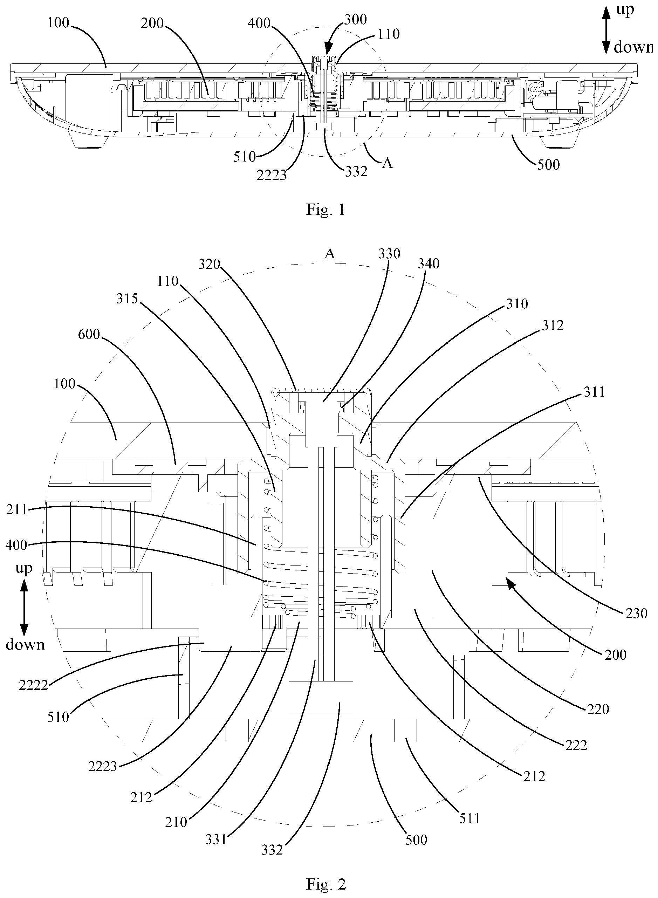

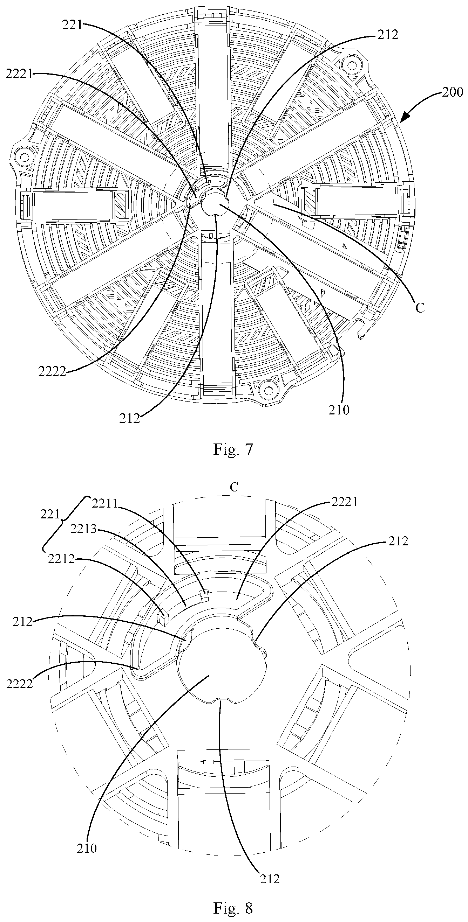

The corresponding relationship between the reference signs and component names in Fig. 1 to Fig. 13 is as follows:
100 panel, 110 through hole, 200 heating part, 210 mounting hole, 211 annular wall, 212 limiting block, 220 mounting groove, 221 limiting rib, 2211 first edge, 2212 second edge, 2213 top edge, 222 water receiving groove, 2221 water guiding hole, 2222 water guiding rib, 2223 water guiding channel, 230 protrusion, 300 movable probe, 310 bracket, 311 outer cover portion, 312 stop-limiting portion, 314 lug, 315 guide post, 320 temperature sensing cap, 330 temperature sensing part, 331 lead-out wire, 332 limiting shell, 340 elastic buffer, 400 elastic support, 500 base, 510 drainage groove, 511 drainage hole, 600 sealing ring, 610 glue groove, 620 sealing convex rib, 630 central hole area, and 640 annular rib.

### DETAILED DESCRIPTION OF THE EMBODIMENTS

In order that the above-mentioned objectives, features and advantages of the present application can be understood more clearly, a further detailed description of the present application will be given below in connection with the accompanying drawings and specific embodiments. It should be noted that the embodiments of the present application and the features in the embodiments can be combined with each other if there is no conflict.

In the following description, numerous specific details are set forth in order to provide a thorough understanding of the present application. However, the present application can also be implemented in other manners than those described herein. Therefore, the protection scope of the present application is not limited to the specific embodiments disclosed below.

A heating appliance according to some embodiments of the present application are described below with reference to Fig. 1 to Fig. 13.

As shown in Fig. 1 to Fig. 13, a heating appliance according to an embodiment of the present application comprises: a panel 100, a heating part 200, a movable probe 300 and an elastic support 400.

Specifically, the panel 100 is provided with a through hole 110. The heating part 200 is located below the panel 100 and is provided with a mounting hole 210 and a limiting block 212 protruding into the mounting hole 210. The movable probe 300 is inserted into the through hole 110 and is capable of moving along the through hole 110. The movable probe 300 is provided with a stop-limiting portion 312. The stop-limiting portion 312 is located below the panel 100 and is configured to be abutted against the panel 100 to restrain the movable probe 300 from escaping from the through hole 110. The elastic support 400 extends into the mounting hole 210 and is supported by the limiting block 212. The elastic support 400 supports the movable probe 300 and provides a force to press the stop-limiting portion 312 to the panel 100.

For the heating appliance provided by the above embodiment of the present application, when a pot is placed on the panel 100, the movable probe 300 will be pressed down to protrude along the through hole 110 to a position on the upper side of the panel 100. At this time, the movable probe 300 will move downwards and compress the elastic support 400 to make the elastic support 400 store energy. After the pot leaves the panel 100, the elastic support 400 releases potential energy and drives the movable probe 300 to move upwardly to reset, thus realizing contact temperature measurement for the pot, which has the advantage of accurate temperature measurement. In this structure, the movable probe 300 is provided with a stop-limiting portion 312 configured to abut against the panel 100 to restrict the movable probe 300 upwardly. Compared with the structure in which a limiting clamp spring for fixing a thermistor is also used to cooperate with the heating part 200 for upward position limiting, in this structure, the number of components is reduced, and it is only necessary to mount the movable probe 300 and the elastic support 400 below the movable probe 300 onto the heating part 200, and then cover them with a panel 100 so as to complete the assembly. In this way, the movable probe 300 can be assembled with the heating part 200 after being formed into a modular structure, and there is no need to involve the assembly process of the movable probe 300 into the entire assembly line of the heating appliance, so that the assembly operation of the heating appliance is simpler and involves fewer processes, which avoids the bottleneck process problem of the heating appliance, and is more conducive to the promotion of the heating appliance in the field.

### Embodiment I (as shown in Figs. 1-10)

As shown in Figs. 1-3, the heating appliance is an induction cooker, which specifically comprises: a panel 100, a heating part 200, a movable probe 300 and an elastic support 400.

The elastic support 400 is a spring. Of course, it may also be replaced by an elastic piece, an elastic rubber member, or the like.

The movable probe 300 specifically comprises: a bracket 310, a temperature sensing cap 320 and a temperature sensing part 330.

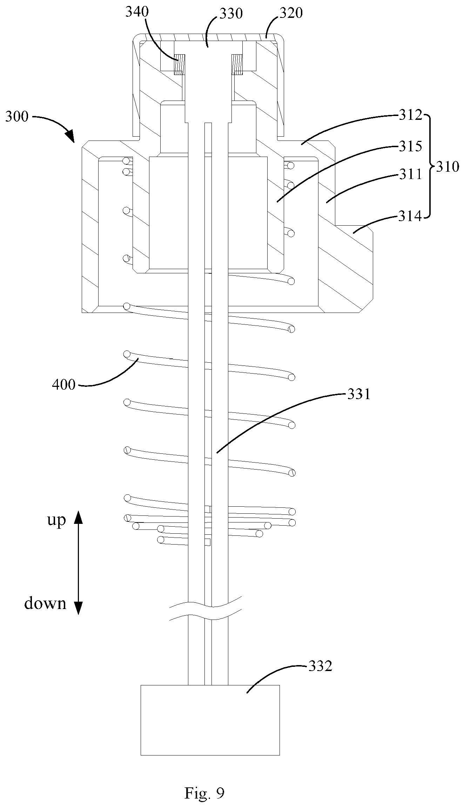

As shown in Figs 9. and 10, the bracket 310 comprises a head and neck portion and an outer cover portion 311. A shaft shoulder is formed between the head and neck portion and the outer cover portion 311. The shaft shoulder serves as a stop-limiting portion 312 for abutting against a part of the panel 100 around the through hole 110 to restrict the movable probe 300.

The outer cover portion 311 is a cavity with an opening facing downward. The top end of the elastic support 400 extends into the outer cover portion 311 and abuts against the inner wall of the outer cover portion 311 to form a structure in which the elastic support 400 supports the bracket 310 and a part of the elastic support 400 that is used for supporting the bracket 310 is arranged inside the outer cover portion 311.

In addition, a guide post 315 is provided in the outer cover portion 311. The outer diameter of the guide post 315 is smaller than the inner diameter of a part of the elastic support 400 that extends into the outer cover portion 311, and the part of the elastic support 400 that extends into the outer cover portion 311 is sleeved outside the guide post 315. In this way, the assembly precision of the elastic support 400 and the movable probe 300 is higher, and the elastic support 400 is not prone to eccentricity. Thus, the movable probe 300 can receive a more balanced force and will not be skewed easily, and the straightness of stretching and contraction of the elastic support 400 can be improved by using the guide post 315, which helps to prolong the service life of the elastic support 400.

The temperature sensing cap 320 is optionally made of a metal material. The temperature sensing cap 320 is connected to the head and neck portion of the bracket 310, and the temperature sensing cap 320 extends into the through hole 110, so that when the bracket 310 moves as the elastic support 400 is stretched or contracted, the temperature sensing cap 320 can be driven to move along the through hole 110. More specifically, the bottom end of the temperature sensing cap 320 does not contact the shaft shoulder between the head and neck portion of the bracket 310 and the outer cover portion 311. In addition, a groove is provided on a side wall surface of the head and neck portion, and a part of the metal cap that corresponds to the groove is riveted and snapped into the groove to achieve the effect of fixing the metal cap to the bracket 310.

The temperature sensing part 330 is optionally a thermistor module. The temperature sensing part 330 is located on the head and neck portion of the bracket 310 and is enclosed and limited by the temperature sensing cap 320, thereby realizing that the temperature sensing part 330, the bracket 310 and the temperature sensing cap 320 are assembled into a modular movable probe 300. Of course, this solution is not limited thereto. The modular structure of the movable probe 300 can also be realized by employing the structures of adhering and fixing the temperature sensing part 330, encapsulating and fixing the temperature sensing part 330 by using encapsulation materials, etc. Specifically, for example, the temperature sensing part 330 is adhered and fixed to the bracket 310, or the temperature sensing part 330 is enclosed and fixed in the bracket 310 by using encapsulation materials.

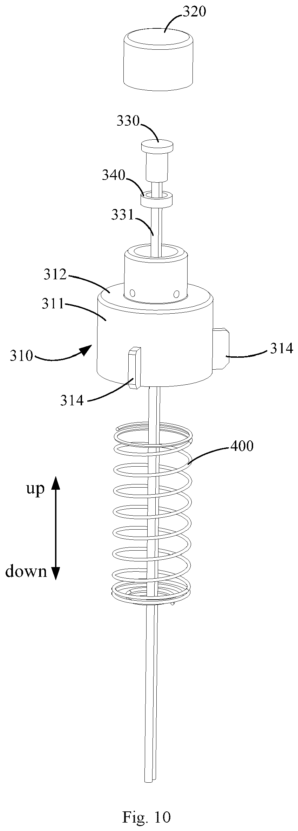

More optionally, as shown in Figs. 9 and 10, an elastic buffer 340 is provided between the temperature sensing part 330 and the bracket 310 for buffering. The elastic buffer 340 can be specifically, for example, an elastic gasket, such as a rubber pad, elastic cotton, etc.

In addition, as shown in Figs. 1 and 2, the temperature sensing part 330 is provided with a lead-out wire 331, and the lead-out wire 331 is used for connection to the components such as a mainboard for signal interaction between the temperature sensing part 330 and the mainboard or for the mainboard to supply power to the temperature sensing part 330. The bracket 310 is hollow. One end of the lead-out wire 331 is connected to the temperature sensing part 330, and the other end is led out downwards along the middle part of the bracket 310. A limiting shell 332 is connected to the lead-out wire 331. The limiting shell 332 is optionally a plastic shell. The elastic support 400 is sleeved outside the lead-out wire 331 and is located between the limiting shell 332 and the bracket 310. One end of the elastic support 400 close to the limiting shell 332 is a spring with small coils. The inner diameter of the spring with small coils is smaller than the outer diameter of the limiting shell 332, or the inner diameter of the spring with small coils is smaller than the maximum size of the contour of the limiting shell 332, so that the elastic support 400 cannot penetrate the limiting shell 332.

In addition, the heating part 200 is a coil disc. Of course, it may also be an infrared electric hot tray or the like. The heating part 200 comprises structures such as a mounting groove 220, a mounting hole 210, a protrusion 230, a limiting rib 221, a water guiding hole 2221, a water guiding rib 2222 and a limiting block 212.

More specifically, as shown in Fig. 2, a mounting groove 220 is provided at the center of the heating part 200, a mounting hole 210 is provided at the center of the bottom of the mounting groove 220, and the lower portion of the elastic support 400 extends into the mounting hole 210. The inner wall of the mounting hole 210 is provided a limiting block 212 protruding towards the center of the mounting hole 210, the bottom end of the elastic support 400 is supported by the limiting block 212, and the lead-out wire 331 of the movable probe 300 passes downwards through an area of the mounting hole 210 that is not shielded by the limiting block 212, so as to be electrically connected to the mainboard from the bottom of the heating part 200.

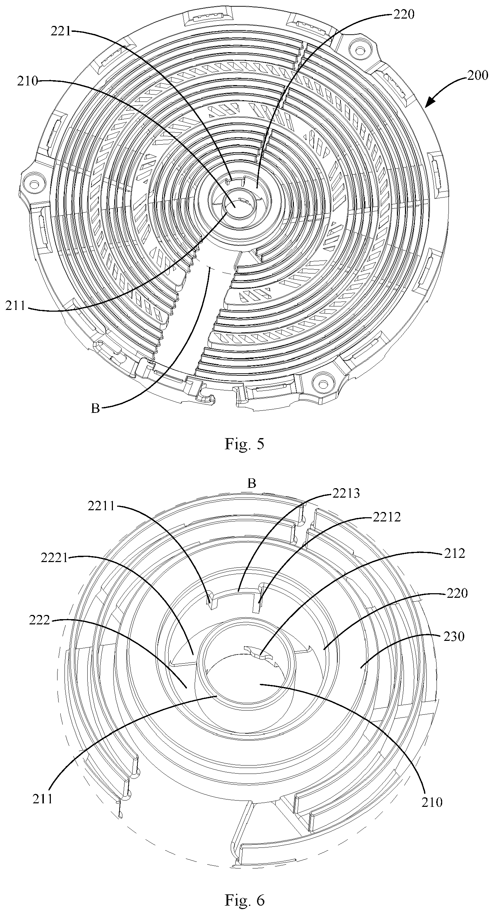

Optionally, as shown in Figs. 5, 6, 7 and 8, the inner wall of the mounting hole 210 is provided with three limiting blocks 212, and the three limiting blocks 212 are distributed at intervals in the circumferential direction so as to support the elastic support 400 evenly and stably.

The bracket 310 of the movable probe 300 is located in the mounting groove 220. The side wall of the mounting groove 220 is provided with a limiting rib 221, the movable probe 300 is provided with a lug 314 on the outer side of the outer cover portion 311 of the bracket 310, and the limiting rib 221 is used to abut against the lug 314 to restrict the movable probe 300 in the mounting groove 220.

More optionally, the movable probe 300 is provided with three lugs 314 on the outer side of the outer cover portion 311 of the bracket 310, and the three lugs 314 are distributed at intervals in the circumferential direction. It is only required that at least one of the lugs 314 is mated with the limiting rib 221. Of course, it is also feasible to design the limiting ribs 221 and the lugs 314 to have a one-to-one mating relationship. Here, by means of the three lugs 314, a mating relationship between the outer cover portion 311 and the mounting groove 220 can further be formed, so as to radially restrict the movable probe 300 such that the movable probe 300 is assembled on the heating part 200 more stably, which prevents the movable probe 300 from being skewed.

Further, as shown in Figs. 5, 6, 7 and 8, the limiting rib 221 is in a n-shape. The lug 314 extends into the area enclosed by the n-shape. Thus, the n-shaped limiting rib 221 can be used to not only limit the lug 314 upwardly to prevent the movable probe 300 from escaping from the mounting groove 220, but also limit the lug 314 on both sides, that is, the rotation of the movable probe 300 is restricted to a certain extent. In this way, it is possible to prevent a failure in limiting the movable probe 300 due to disengagement between the lug 314 and the limiting rib 221, and also prevent the problem of entanglement of the lead-out wire 331 of the movable probe 300 caused by the rotation of the movable probe 300.

Furthermore, the n-shaped limiting rib includes two side edges and a top edge corresponding to the n-shape. Specifically, the two side edges of the n-shape are correspondingly a first edge 2211 and a second edge 2212, the first edge 2211 and the second edge 2212 have one end connected to a top edge 2213 of the n-shape, and the first edge 2211 is shorter than the second edge 2212, so that the other end of the first edge 2211 is higher than the other end of the second edge 2212.

For this structure, the mounting steps of the movable probe 300 and the heating part 200 are as follows. When the movable probe 300 is pressed down until the lug 314 is lower than the other end of the first edge 2211, the lug 314 is moved, by rotating the movable probe 300, in the circumferential direction from a position where the first edge 2211 is shorter than the second edge 2212 to a position between the first edge 2211 and the second edge 2212. Moreover, since the second edge 2212 is longer than the first edge 2211, the lug 314 abutting against the second edge 2212 can be regarded as an indication of rotation in place during the rotation. At this time, after the downward pressure on the movable probe 300 is released, the elastic support 400 can release potential energy to drive the lug 314 to automatically enter the area enclosed by the n shape so as to complete the assembly, which has the advantages of simple structure and convenient assembly.

Further, as shown in Figs. 5, 6, 7 and 8, the mounting hole 210 has an annular wall 211, the heating part 200 is provided with a water receiving groove 222 distributed around the annular wall 211, and the annular wall 211 separates a space of the water receiving groove 222 from an inner space of the mounting hole 210. More specifically, an area of the lower portion of the mounting groove 220 located on the outer side of the annular wall 211 may be formed as the water receiving groove 222 for receiving water.

Furthermore, as shown in Fig. 2, the mouth of the outer cover portion 311 of the bracket 310 extends downward into the water receiving groove 222, and the annular wall 211 extends into the outer cover portion 311 along the opening of the outer cover portion 311. In this way, the outer cover portion 311 can shield the annular wall 211, so that water entering along the through hole 110 is blocked outside the outer cover portion 311 by the outer cover portion 311, thereby preventing water from entering the mounting hole 210 and further enhancing the electrical safety of the product. Moreover, since the mouth of the outer cover portion 311 extends downwards into the water receiving groove 222, water on the surface of the outer cover portion 311 is directly guided into the water receiving groove 222, which can promote water entering the heating appliance to be discharged along a drainage structure as soon as possible, thereby preventing water entering the heating appliance from flowing freely, and avoiding mold and damp inside the heating appliance.

Furthermore, as shown in Figs. 1 and 2, the heating appliance further comprises a base 500 located below the heating part 200. The base 500 is provided with a drainage groove 510. Optionally, the bottom surface of the drainage groove 510 is provided with a drainage hole 511 for the drainage groove 510 to directly drain water to the outside of the base 500. The drainage structure comprises a water guiding hole 2221 and a water guiding channel 2223 extending from the water guiding hole 2221 into the drainage groove 510. In this way, water at the water receiving groove 222 that is drained through the water guiding hole 2221 can be gently guided to the drainage groove 510 by the water guiding channel 2223, which avoids the problem of waterdrops splashing to affect the normal operation of other components, and ensures that water entering the heating appliance is drained off along the drainage groove 510 as soon as possible and as thoroughly as possible.

Optionally, the water guiding channel 2223 has a semi-annular structure, having a curvature adapted to the curvature of the annular water receiving groove 222 distributed around the annular wall 211 of the mounting hole 210.

More specifically, the hole wall of the water guiding hole 2221 extends downwards to form a water guiding rib 2222. The extension length of the water guiding rib 2222 is 1 mm-3 mm, that is, the vertical height of the water guiding rib 2222 is 1 mm-3 mm. In this design, the water guiding channel 2223 is enclosed by the water guiding rib 2222.

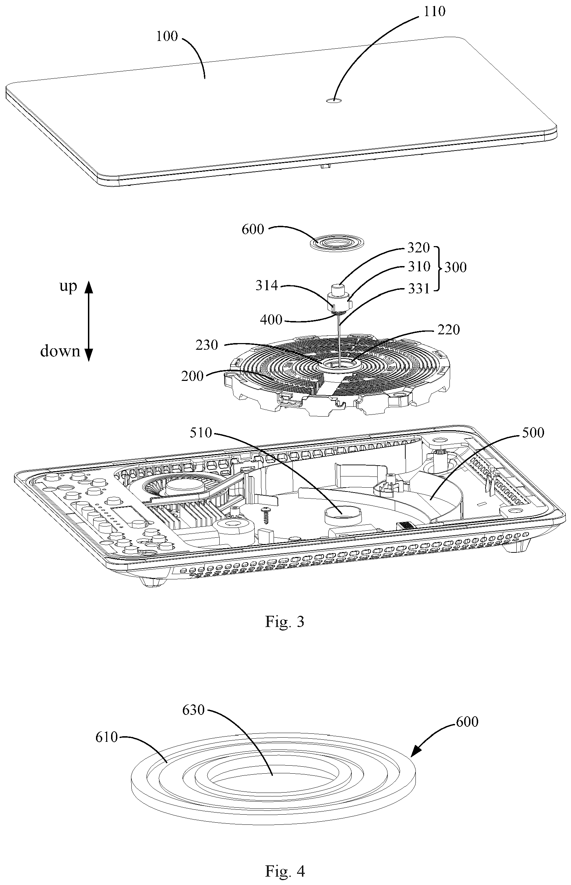

Further, as shown in Figs. 3 and 4, the heating appliance further comprises a sealing ring 600. The sealing ring 600 is provided with a glue groove 610, and a glue layer is provided in the glue groove 610 so as to adhere the sealing ring 600 to the panel 100 by the glue layer. The sealing ring 600 is an annular structure. The through hole 110 on the panel 100 faces the central hole area 630 of the sealing ring 600. At the time of assembling the panel 100, the sealing ring 600 on the panel 100 is pressed onto the heating part 200, so that the sealing ring 600 is hermetically connected to the panel 100 and the heating part 200. A recess is optionally provided at the bottom of the sealing ring 600, and the protrusion 230 is upwardly embedded into the recess to form an embedded fit, and abuts against the concave surface of the recess to achieve sealing.

Generally speaking, the mounting solution of the whole heating appliance is as follows: inserting the lower portion of the elastic support 400 of the movable probe 300 and elastic support 400 assembly into the central mounting hole 210 of the heating part 200; electrically connecting the lead-out wire 331 of the movable probe 300 to the main board from the bottom of the heating part 200; and mounting the panel 100 with the sealing ring 600 adhered thereto on the base 500 where the heating part 200 is located.

More specifically, when mounted to the heating part 200, the elastic support 400 of the movable probe 300 and elastic support 400 assembly extends into the mounting hole 210, and is supported by the limiting block 212 in the mounting hole 210. At the same time, an end of the elastic support 400 is radially limited by the guide post 315 of the bracket 310, and the other end is radially limited by the annular wall 211 of the mounting hole 210 of the heating part 200, which avoids the problem of eccentricity of the movable probe 300 caused by mounting deviation of the elastic support 400.Themovable probe 300 is then pressed downwards until the bottom end of the bracket 310 contacts the bottom surface of the mounting groove 220 of the heating part 200. At this time, the upper end surfaces of the three lugs 314 evenly distributed on the outer side of the bracket 310 are lower than the lower end surface of the first edge 2211 of the limiting rib 221. The movable probe 300 is rotated until the lug 314 of the bracket 310 is blocked by the second edge 2212 of the limiting rib 221, then the movable probe 300 is released, and the bracket 310 is driven upwardly by the elastic support 400 so that the lug 314 enters the n-shape interior of the limiting rib 221. In this way, the movable probe 300 cannot be ejected out of the mounting groove 220 of the heating part 200 by the elastic support 400, thereby completing the assembly between the movable probe 300 and elastic support 400assemblyand the heating part 200.

After the lead-out wire 331 of the movable probe 300 is electrically connected to the mainboard from the bottom of the heating part 200, the panel 100 with the sealing ring 600 adhered thereto is mounted on the base 500 where the heating part 200 is located. At the time of mounting the panel 100 with the sealing ring 600 adhered thereto, the diameter of the through hole 110 of the panel 100 is larger than the diameter of the temperature sensing cap 320, and smaller than the outer diameter of the stop-limiting portion 312 of the bracket 310, that is, smaller than the outer diameter of the outer cover portion 311, and the bottom surface of the panel 100 presses the stop-limiting portion 312 of the bracket 310 downwards. After the panel 100 is mounted in place, the top surface of the lug 314 of the bracket 310 escapes from the vertical limiting of the limiting rib 221. When a pot placed on the panel 100 presses the temperature sensing cap 320 downwards, the movable probe 300 can be further moved downwards. The distance by which the movable probe 300 can be pressed downwards is larger than the distance by which the movable probe 300 protrudes from the panel 100. When the movable probe 300 is not pressed down, the movable probe 300 rebounds under the action of the elastic support 400 so that the temperature sensing cap 320 extends along the through hole 110 to the outside of the panel 100.

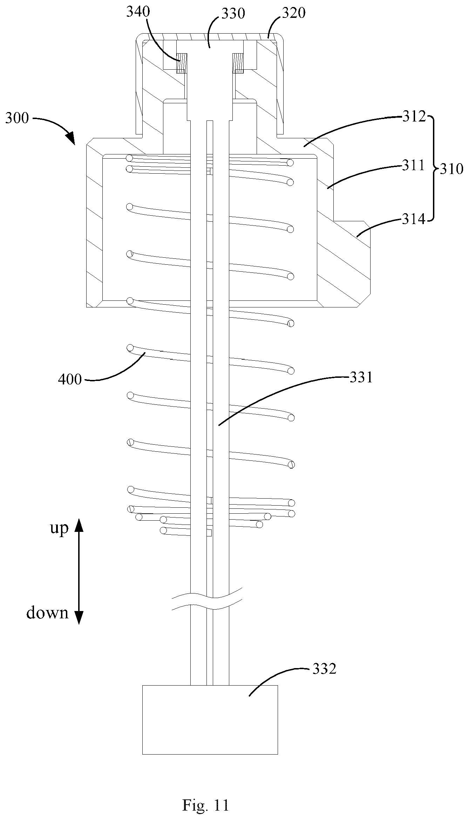

### Embodiment II (as shown in Fig. 11)

Different from the foregoing Embodiment I, in this solution, as shown in Fig. 11, the outer cover portion 311 of the bracket 310 is a cavity with no guide post 315 provided therein, and positioning and radial limiting of the elastic support 400 is formed by the elastic support 400 being adapted to the mounting hole 210.

For the contents of Embodiment II that are the same as Embodiment I of the present application, reference may be made to the above description of Embodiment I, which will not be repeated here.

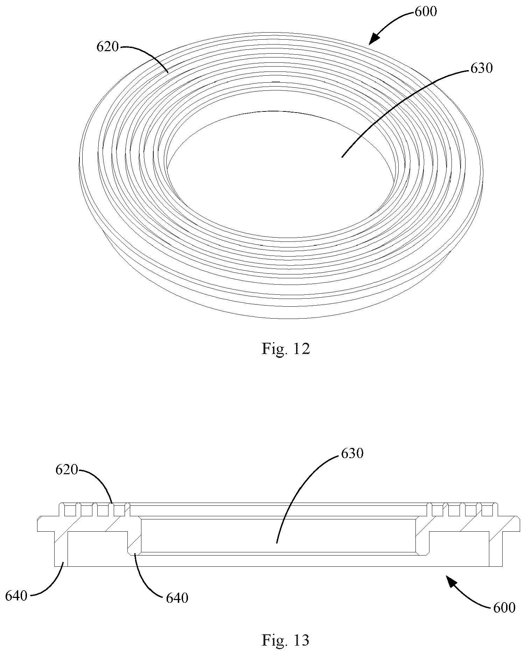

### Embodiment III (as shown in Figs. 12 and 13)

Different from the foregoing Embodiment I or Embodiment II, in this solution, as shown in Figs. 12 and 13, the top surface of the sealing ring 600 is provided with a plurality of sealing convex ribs 620. The sealing convex ribs 620 are optionally annular ring ribs. The bottom surface of the sealing ring 600 is provided with two rings of annular ribs 640 to define a n-shaped clamping groove. The heating part 200 is provided with an annular protrusion 230.The clamping groove is used as a recess to be clamped on the annular protrusion 230 of the heating part 200. After the sealing ring 600 is clamped and assembled on the heating part 200, the panel 100 is assembled on the heating part 200, to enable the panel 100 to press down the sealing convex ribs 620 of the sealing ring 600 to achieve an interference fit between the panel 100 and the sealing ring 600. Optionally, the magnitude of interference between the panel 100 and the sealing ring 600 is designed to be greater than the height of the sealing convex ribs 620, so that after the assembly, the panel 100 squeezes the sealing ring 600 to cause the sealing convex ribs 620 to be toppled, thus achieving the effect of waterproofing by sealing the gap between the sealing ring 600 and the panel 100.

More optionally, the bottom surface of the clamping groove of the sealing ring 600 is in contact with the top surface of the protrusion 230 of the heating part 200. The bottom surface of the clamping groove of the sealing ring 600 is provided with a plurality of radial ridges, and the top surface of the protrusion 230 of the heating part 200 is provided with trenches corresponding to the radial ridges. When the sealing ring 600 is mounted on the heating part 200, the radial ridges are embedded into the corresponding trenches to form an obvious assembly feel.

For the contents of Embodiment III that are the same as Embodiment I or Embodiment II of the present application, reference may be made to the above description of Embodiment I or Embodiment II, which will not be repeated here.

Of course, in addition to the case where the heating appliance is an induction cooker as listed in Embodiment I and Embodiment II above, the heating appliance may also be an infrared oven, a hob, etc., which will not be listed exhaustively here, but are all covered by the protection scope of this solution without departing from the design concept.

In the present application, the terms "first" and "second" are used for the purpose of description only, and cannot be understood as indicating or implying relative importance. The term "a plurality of" means two or more, unless otherwise explicitly defined. The terms "mounting", "connected", "connection", "fixing" and the like should be understood in a broad sense, for example, "connection" may be a fixed connection, and may also be a removable connection, or an integral connection; and "connected" may refer to direct connection and may also refer to indirect connection through an intermediary. A person of ordinary skills in the art could understand the specific meaning of the terms in the present application according to specific situations.

In the description of the present application, it should be understood that the orientation or position relationships indicated by the terms "upper", "lower" and the like are the orientation or position relationships based on what is shown in the drawings, are merely for the convenience of describing the present application and simplifying the description, and do not indicate or imply that the device or unit referred to must have a particular direction and is constructed and operated in a specific orientation, and thus cannot be understood as the limitation of the present application.

## Claims

1. A heating appliance, comprising:
a panel (100) provided with a through hole (110);
a heating part (200) located below the panel (100) and provided with a mounting hole (210) and a limiting block (212) protruding into the mounting hole (210);
a movable probe (300) inserted into the through hole (110) and capable of moving along the through hole (110), the movable probe (300) being provided with a stop-limiting portion (312), the stop-limiting portion (312) being located below the panel (100) and being configured to abut against the panel (100) in order to restrain the movable probe (300) from disengaging from the through hole (110); and
an elastic support (400) inserted into the mounting hole (210) and supported by the limiting block (212), the elastic support (400) supporting the movable probe (300) and providing a force to press the stop-limiting portion (312) against the panel (100)
, **characterized in that**
the heating part (200) is provided with a mounting groove (220) in which the movable probe (300) is assembled, wherein a side wall of the mounting groove (220) is provided with a limiting rib (221), the movable probe (300) is provided with a lug (314), and the limiting rib (221) is configured to abut against the lug (314) to restrict the movable probe (300) in the mounting groove (220).

2. The heating appliance according to claim 1, wherein
the limiting rib (221) is in a n-shape, and the lug (314) protrudes into an area enclosed by the n-shape, wherein
two side edges of the n-shape are a first edge (2211) and a second edge (2212), the first edge (2211) and the second edge (2212) have first ends connected to a top edge (2213) of the n-shape, and the first edge (2211) is shorter than the second edge (2212), so that a second end of the first edge (2211) is higher than a second end of the second edge (2212).

3. The heating appliance according to any one of claims 1 or 2, wherein
the mounting hole (210) has an annular wall (211), the heating part (200) is provided with a water receiving groove (222) distributed around the annular wall (211), and the annular wall (211) separates a space of the water receiving groove (222) from an inner space of the mounting hole (210).

4. The heating appliance according to claim 3, wherein
the movable probe (300) is provided with an outer cover portion (311) with an opening facing downwards, wherein a mouth of the outer cover portion (311) extends downwards into the water receiving groove (222), and the annular wall (211) extends into the outer cover portion (311) along the opening of the outer cover portion (311).

5. The heating appliance according to claim 4, wherein
a part of the elastic support (400) for supporting the movable probe (300) is arranged inside the outer cover portion (311).

6. The heating appliance according to claim 3 or 5, wherein
the movable probe (300) is provided with an outer cover portion (311) with an opening facing downwards, wherein a part of the elastic support (400) for supporting the movable probe (300) is arranged inside the outer cover portion (311).

7. The heating appliance according to any one of claims 3-6, wherein
the water receiving groove (222) is provided with a drainage structure for drainage, wherein the heating appliance further comprising:
a base (500) located below the heating part (200), the base (500) being provided with a drainage groove (510), and the drainage structure comprising a water guiding hole (2221) and a water guiding channel (2223) extending from the water guiding hole (2221) into the drainage groove (510).

8. The heating appliance according to claim 7, wherein
a hole wall of the water guiding hole (2221) extends downwards to form a water guiding rib (2222), the water guiding rib (2222) has an extension length of 1 mm-3 mm, and the water guiding rib (2222) encloses the water guiding channel (2223).

9. The heating appliance according to any one of claims 1-8, further comprising:
a sealing ring (600) provided between the panel (100) and the heating part (200) and forming a sealing fit with the panel (100) and the heating part (200), wherein the through hole (110) is aligned with a central hole area of the sealing ring (600), wherein
a glue groove (610) is provided on the sealing ring (600), a glue layer is provided in the glue groove (610), and the sealing ring (600) is adhered to the panel (100) through the glue layer, and/or
wherein
the sealing ring (600) is provided with a plurality of sealing convex ribs (620), and the sealing convex ribs (620)are compressed by the panel (100) for sealing.

10. The heating appliance according to any one of claims 8 or 9, wherein
one of the heating part (200) and the sealing ring (600) is provided with a protrusion (230), and the other is provided with a recess, and the protrusion (230) is embedded in the recess and abuts against a concave surface of the recess.

11. The heating appliance according to any one of claims 9 or 10, wherein
a plurality of radial ridges are provided on a surface of the sealing ring (600) for fitting with the heating part (200), trenches corresponding to the radial ridges are provided on the heating part (200), and the radial ridges are embedded in the corresponding trenches.

12. The heating appliance according to any one of claims 1-11, wherein
a lead-out wire (331) is connected to the movable probe (300), and the lead-out wire (331) passes downwards through the mounting hole (210), wherein
the lead-out wire (331) is connected to a limiting shell (332), the elastic support (400) is a spring, the spring is sleeved outside the lead-out wire (331) and is located between the limiting shell (332) and the movable probe (300), and an inner diameter of an end of the spring close to the limiting shell (332) is smaller than an outer diameter of the limiting shell (332).

13. The heating appliance according to claim 12, wherein
the movable probe (300) is provided with a guide post (315), and an end of the spring close to the movable probe (300) is sleeved outside the guide post (315).

14. The heating appliance according to any one of claims 1-13, wherein the movable probe (300) comprises:
a bracket supported by the elastic support (400);
a temperature sensing cap (320) connected to the bracket (310), the temperature sensing cap (320) extending into the through hole (110), and when the bracket (310) moves, the bracket (310) drives the temperature sensing cap (320) to move along the through hole (110); and
a temperature sensing part (330) located on the bracket (310) and enclosed and limited by the temperature sensing cap (320).

## Patentansprüche

1. Heizgerät, umfassend:
eine Platte (100), die mit einem Durchgangsloch (110) versehen ist;
ein Heizteil (200), das sich unterhalb der Platte (100) befindet und mit einem Montageloch (210) und einem in das Montageloch (210) hineinragenden Begrenzungsblock (212) versehen ist;
eine bewegliche Sonde (300), die in das Durchgangsloch (110) eingeführt ist und sich entlang des Durchgangslochs (110) bewegen kann, wobei die bewegliche Sonde (300) mit einem Anschlagbegrenzungsbereich (312) versehen ist, wobei sich der Anschlagbegrenzungsbereich (312) unterhalb der Platte (100) befindet und so konfiguriert ist, dass er an der Platte (100) anliegt, um die bewegliche Sonde (300) daran zu hindern, sich aus dem Durchgangsloch (110) zu lösen; und
eine elastische Halterung (400), die in das Montageloch (210) eingesetzt und von dem Begrenzungsblock (212) gehalten wird, wobei die elastische Halterung (400) die bewegliche Sonde (300) hält und eine Kraft bereitstellt, um den Anschlagbegrenzungsbereich (312) gegen die Platte (100) zu drücken **dadurch gekennzeichnet, dass**
das Heizteil (200) mit einer Montagenut (220) versehen ist, in der die bewegliche Sonde (300) montiert ist, wobei eine Seitenwand der Montagenut (220) mit einer Begrenzungsrippe (221) versehen ist, die bewegliche Sonde (300) mit einer Lasche (314) versehen ist und die Begrenzungsrippe (221) so konfiguriert ist, dass sie an der Lasche (314) anliegt, um die bewegliche Sonde (300) in der Montagenut (220) zu begrenzen.

2. Heizgerät gemäß Anspruch 1, wobei
die Begrenzungsrippe (221) eine n-Form aufweist und die Lasche (314) in einen von der n-Form eingeschlossenen Bereich hineinragt, wobei
zwei Seitenkanten der n-Form eine erste Kante (2211) und eine zweite Kante (2212) sind, die erste Kante (2211) und die zweite Kante (2212) erste Enden aufweisen, die mit einer oberen Kante (2213) der n-Form verbunden sind, und die erste Kante (2211) kürzer als die zweite Kante (2212) ist, so dass ein zweites Ende der ersten Kante (2211) höher ist als ein zweites Ende der zweiten Kante (2212).

3. Heizgerät gemäß einem der Ansprüche 1 oder 2, wobei
das Montageloch (210) eine ringförmige Wand (211) aufweist, das Heizteil (200) mit einer Wasseraufnahmerille (222) versehen ist, die um die ringförmige Wand (211) herum verteilt ist, und die ringförmige Wand (211) einen Raum der Wasseraufnahmerille (222) von einem inneren Raum des Montagelochs (210) trennt.

4. Heizgerät gemäß Anspruch 3, wobei
die bewegliche Sonde (300) mit einem äußeren Abdeckungsbereich (311) mit einer nach unten weisenden Öffnung versehen ist, wobei sich eine Mündung des äußeren Abdeckungsbereichs (311) nach unten in die Wasseraufnahmerille (222) erstreckt und sich die ringförmige Wand (211) in den äußeren Abdeckungsbereich (311) entlang der Öffnung des äußeren Abdeckungsbereichs (311) erstreckt.

5. Heizgerät gemäß Anspruch 4, wobei
ein Teil der elastischen Halterung (400) zum Halten der beweglichen Sonde (300) im Inneren des äußeren Abdeckungsbereichs (311) angeordnet ist.

6. Heizgerät gemäß Anspruch 3 oder 5, wobei
die bewegliche Sonde (300) mit einem äußeren Abdeckungsbereich (311) mit einer nach unten weisenden Öffnung versehen ist, wobei ein Teil der elastischen Halterung (400) zum Halten der beweglichen Sonde (300) innerhalb des äußeren Abdeckungsbereichs (311) angeordnet ist.

7. Heizgerät gemäß einem der Ansprüche 3-6, wobei
die Wasseraufnahmerille (222) mit einer Drainagestruktur zur Entwässerung versehen ist, wobei das Heizgerät ferner Folgendes umfasst:
eine Basis (500), die sich unterhalb des Heizteils (200) befindet, wobei die Basis (500) mit einer Drainagerille (510) versehen ist und die Drainagestruktur umfassend ein Wasserführungsloch (2221) und einen Wasserführungskanal (2223), der sich von dem Wasserführungsloch (2221) in die Drainagerille (510) erstreckt.

8. Heizgerät gemäß Anspruch 7, wobei
sich eine Lochwand des Wasserführungslochs (2221) nach unten erstreckt, um eine Wasserführungsrippe (2222) auszubilden, die Wasserführungsrippe (2222) eine Ausdehnungslänge von 1 mm-3 mm aufweist und die Wasserführungsrippe (2222) den Wasserführungskanal (2223) umschließt.

9. Heizgerät gemäß einem der Ansprüche 1-8, ferner umfassend:
einen Dichtungsring (600), der zwischen der Platte (100) und dem Heizteil (200) vorgesehen ist und einen dichtenden Sitz mit der Platte (100) und dem Heizteil (200) ausbildet, wobei das Durchgangsloch (110) mit einem zentralen Lochbereich des Dichtungsrings (600) ausgerichtet ist, wobei
eine Klebenut (610) auf dem Dichtungsring (600) vorgesehen ist, eine Klebeschicht in der Klebenut (610) vorgesehen ist und der Dichtungsring (600) durch die Klebeschicht an die Platte (100) geklebt ist, und/oder
wobei
der Dichtungsring (600) mit einer Vielzahl von konvexen Dichtungsrippen (620) versehen ist, und die konvexen Dichtungsrippen (620) durch die Platte (100) zum Abdichten zusammengedrückt werden.

10. Heizgerät gemäß einem der Ansprüche 8 oder 9, wobei
eines von dem Heizteil (200) und dem Dichtungsring (600) mit einem Vorsprung (230) versehen ist und das andere mit einer Aussparung versehen ist, und der Vorsprung (230) in die Aussparung eingebettet ist und an einer konkaven Oberfläche der Aussparung anliegt.

11. Heizgerät gemäß einem der Ansprüche 9 oder 10, wobei
eine Vielzahl von radialen Wulsten auf einer Oberfläche des Dichtungsrings (600) vorgesehen sind, um mit dem Heizteil (200) zusammenzupassen, Gräben, die den radialen Wulsten entsprechen, auf dem Heizteil (200) vorgesehen sind, und die radialen Wulste in die entsprechenden Gräben eingebettet sind.

12. Heizgerät gemäß einem der Ansprüche 1-11, wobei
ein Anschlussdraht (331) mit der beweglichen Sonde (300) verbunden ist, und der Anschlussdraht (311) nach unten durch das Montageloch (210) verläuft, wobei der Anschlussdraht (331) mit einer Begrenzungshülse (332) verbunden ist, die elastische Halterung (400) eine Feder ist, die Feder außerhalb des Anschlussdrahts (331) ummantelt ist und sich zwischen der Begrenzungshülse (332) und der beweglichen Sonde (300) befindet, und ein Innendurchmesser eines Endes der Feder nahe der Begrenzungshülse (332) kleiner ist als ein Außendurchmesser der Begrenzungshülse (332).

13. Heizgerät gemäß Anspruch 12, wobei
die bewegliche Sonde (300) mit einem Führungspfosten (315) versehen ist und ein Ende der Feder nahe der beweglichen Sonde (300) außerhalb des Führungspfostens (315) ummantelt ist.

14. Heizgerät gemäß einem der Ansprüche 1-13, wobei die bewegliche Sonde (300) Folgendes umfasst:
einen von der elastischen Halterung (400) gehaltenen Bügel;
eine Temperaturmesskappe (320), die mit dem Bügel (310) verbunden ist, wobei sich die Temperaturmesskappe (320) in das Durchgangsloch (110) hinein erstreckt und, wenn sich der Bügel (310) bewegt, der Bügel (310) die Temperaturmesskappe (320) antreibt, so dass sie sich entlang des Durchgangslochs (110) bewegt; und
ein Temperaturfühlerteil (330), das sich auf dem Bügel (310) befindet und von der Temperaturfühlerkappe (320) umschlossen und begrenzt wird.

## Revendications

1. Appareil de chauffage comprenant
un panneau (100) pourvu d'un trou de passage (110) ;
une partie chauffante (200) située sous le panneau (100) et pourvue d'un trou de montage (210) et d'un bloc de limitation (212) faisant saillie dans le trou de montage (210) ;
une sonde mobile (300) insérée dans le trou de passage (110) et capable de se déplacer le long du trou de passage (110), la sonde mobile (300) étant pourvue d'une partie de limitation d'arrêt (312), la partie de limitation d'arrêt (312) étant située sous le panneau (100) et étant configurée pour s'appuyer contre le panneau (100) afin d'empêcher la sonde mobile (300) de se désengager du trou de passage (110) ; et
un support élastique (400) inséré dans le trou de montage (210) et soutenu par le bloc de limitation (212), le support élastique (400) soutenant la sonde mobile (300) et fournissant une force pour presser la partie de limitation d'arrêt (312) contre le panneau (100)
**caractérisé par le fait que**
la partie chauffante (200) est pourvue d'une rainure de montage (220) dans laquelle la sonde mobile (300) est assemblée, dans laquelle une paroi latérale de la rainure de montage (220) est pourvue d'une nervure de limitation (221), la sonde mobile (300) est pourvue d'un ergot (314), et la nervure de limitation (221) est configurée pour venir en butée contre l'ergot (314) afin de restreindre la sonde mobile (300) dans la rainure de montage (220).

2. Appareil de chauffage selon la revendication 1, dans lequel
la nervure de limitation (221) a une forme en n, et l'ergot (314) fait saillie dans une zone délimitée par la forme en n, dans laquelle
deux bords latéraux de la forme en n sont un premier bord (2211) et un second bord (2212), le premier bord (2211) et le second bord (2212) ont des premières extrémités reliées à un bord supérieur (2213) de la forme en n, et le premier bord (2211) est plus court que le second bord (2212), de sorte qu'une seconde extrémité du premier bord (2211) est plus haute qu'une seconde extrémité du second bord (2212).

3. L'appareil de chauffage selon l'une des revendications 1 ou 2, dans lequel
le trou de montage (210) a une paroi annulaire (211), la partie chauffante (200) est pourvue d'une rainure de réception d'eau (222) répartie autour de la paroi annulaire (211), et la paroi annulaire (211) sépare un espace de la rainure de réception d'eau (222) d'un espace intérieur du trou de montage (210).

4. Appareil de chauffage selon la revendication 3, dans lequel
la sonde mobile (300) est pourvue d'une partie de couvercle extérieur (311) avec une ouverture orientée vers le bas, dans laquelle une bouche de la partie de couvercle extérieur (311) s'étend vers le bas dans la rainure de réception de l'eau (222), et la paroi annulaire (211) s'étend dans la partie de couvercle extérieur (311) le long de l'ouverture de la partie de couvercle extérieur (311).

5. Appareil de chauffage selon la revendication 4, dans lequel
une partie du support élastique (400) destiné à soutenir la sonde mobile (300) est disposée à l'intérieur de la partie extérieure du couvercle (311).

6. L'appareil de chauffage selon la revendication 3 ou 5, dans lequel
la sonde mobile (300) est pourvue d'une partie de couverture extérieure (311) avec une ouverture orientée vers le bas, dans laquelle une partie du support élastique (400) pour soutenir la sonde mobile (300) est disposée à l'intérieur de la partie de couverture extérieure (311).

7. L'appareil de chauffage selon l'une des revendications 3 à 6, dans lequel
la rainure de réception de l'eau (222) est pourvue d'une structure de drainage pour l'écoulement, l'appareil de chauffage comprenant en outre :
une base (500) située sous la partie chauffante (200), la base (500) étant pourvue d'une rainure de drainage (510), et la structure de drainage comprenant un trou de guidage de l'eau (2221) et un canal de guidage de l'eau (2223) s'étendant du trou de guidage de l'eau (2221) dans la rainure de drainage (510).

8. Appareil de chauffage selon la revendication 7, dans lequel
une paroi du trou de guidage de l'eau (2221) s'étend vers le bas pour former une nervure de guidage de l'eau (2222), la nervure de guidage de l'eau (2222) a une longueur d'extension de 1 mm-3 mm, et la nervure de guidage de l'eau (2222) entoure le canal de guidage de l'eau (2223).

9. L'appareil de chauffage selon l'une des revendications 1 à 8, comprenant en outre :
un anneau d'étanchéité (600) placé entre le panneau (100) et la partie chauffante (200) et formant un joint d'étanchéité avec le panneau (100) et la partie chauffante (200), dans lequel le trou traversant (110) est aligné avec une zone de trou central de l'anneau d'étanchéité (600), dans lequel
une rainure de collage (610) est prévue sur la bague d'étanchéité (600), une couche de colle est prévue dans la rainure de collage (610), et la bague d'étanchéité (600) est collée au panneau (100) par l'intermédiaire de la couche de colle, et/ou
dans lequel
l'anneau d'étanchéité (600) est pourvu d'une pluralité de nervures convexes d'étanchéité (620), et les nervures convexes d'étanchéité (620) sont comprimées par le panneau (100) pour l'étanchéité.

10. L'appareil de chauffage selon l'une des revendications 8 ou 9, dans lequel
l'une des parties chauffantes (200) et l'anneau d'étanchéité (600) sont pourvus d'une saillie (230), et l'autre est pourvue d'un renfoncement, et la saillie (230) est encastrée dans le renfoncement et vient en butée contre une surface concave du renfoncement.

11. L'appareil de chauffage selon l'une des revendications 9 ou 10, dans lequel
une pluralité d'arêtes radiales sont prévues sur une surface de la bague d'étanchéité (600) pour s'adapter à la partie chauffante (200), des tranchées correspondant aux arêtes radiales sont prévues sur la partie chauffante (200), et les arêtes radiales sont encastrées dans les tranchées correspondantes.

12. L'appareil de chauffage selon l'une des revendications 1 à 11, dans lequel
un fil de sortie (331) est connecté à la sonde mobile (300), et le fil de sortie (311) passe vers le bas à travers le trou de montage (210), dans lequel
le fil de sortie (331) est relié à une coquille de limitation (332), le support élastique (400) est un ressort, le ressort est gainé à l'extérieur du fil de sortie (331) et est situé entre la coquille de limitation (332) et la sonde mobile (300), et un diamètre intérieur d'une extrémité du ressort proche de la coquille de limitation (332) est plus petit qu'un diamètre extérieur de la coquille de limitation (332).

13. Appareil de chauffage selon la revendication 12, dans lequel
la sonde mobile (300) est pourvue d'un poteau de guidage (315), et une extrémité du ressort proche de la sonde mobile (300) est manchonnée à l'extérieur du poteau de guidage (315).

14. L'appareil de chauffage selon l'une des revendications 1 à 13, dans lequel la sonde mobile (300) comprend :
un support soutenu par le support élastique (400) ;
un capuchon de détection de température (320) relié au support (310), le capuchon de détection de température (320) s'étendant dans le trou de passage (110), et lorsque le support (310) se déplace, le support (310) entraîne le capuchon de détection de température (320) à se déplacer le long du trou de passage (110) ; et
une partie de détection de la température (330) située sur le support (310) et enfermée et limitée par le capuchon de détection de la température (320).
